# EUROPÄISCHE PATENTSCHRIFT

(11) **EP 0 201 722 B1**
(45) Veröffentlichungstag und Bekanntmachung des Hinweises auf die Patenterteilung: **24.02.1993**
(21) Anmeldenummer: 86104817.1
(22) Anmeldetag: 09.04.1986
(51) Int. Cl.: C05F 3/00

(54) **Verfahren zum Umwandeln von Gülle o. dgl. in Düngestoff**
Process for transforming liquid manure or the like into fertilizer
Procédé pour la transformation de purin en engrais

(30) Priorität: 16.04.1985 DE 3513480
(43) Veröffentlichungstag der Anmeldung: 20.11.1986
(73) Patentinhaber: Spitz Rohstoffe & Recycling GmbH, D-26382 Wilhelmshaven (DE)
(72) Erfinder: Spitz Rohstoffe & Recycling GmbH, D-26382 Wilhelmshaven (DE)
(74) Vertreter: Eisenführ, Speiser & Partner

(56) Entgegenhaltungen:
- EP-A- 0 099 052
- CH-A- 138 890
- CH-A- 642 341
- DE-A- 1 592 758
- DE-A- 1 592 812
- DE-C- 3 225 454
- US-A- 1 364 387
- Mitteilungen für die schweizerische Landwirtschaft, No. 8, Jahrgang 26, 1978, S. 141-147

## Beschreibung

Die Erfindung betrifft ein Verfahren zum Umwandeln von Ammonium-haltiger Gülle oder dergleichen in einen weitgehend geruchslosen, Grundwasser-unschädlichen festen wenigstens ein Ammonium-absorbierendes Tonmineral enthaltenden Düngestoff.

In der Landwirtschaft besteht in Verbindung mit der intensiven Massenviehhaltung das Problem, daß die hierbei anfallenden, erheblichen Mengen Gülle nicht mehr auf die landwirtschaftlichen Böden aufgebracht werden können, ohne daß das Grundwasser durch unerträgliche Nitratmengen belastet wird. Hinzu kommt der penetrante Geruch solcher Gülle. Da die Gülle in den Wintermonaten von Bodenbakterien kaum abgebaut werden kann, entsteht während dieser Zeit eine besonders starke Belastung des Grundwassers durch Stickstoff, so daß der Gesetzgeber Einschränkungen für die Gülle-Ausbringungszeiten erlassen hat. Außerdem wurde die auf eine bestimmte Menge landwirtschaftlichen Bodens ausbringbare Güllemenge beschränkt, so daß sich ein erheblicher Gülleüberhang ergibt.

Auf der anderen Seite enthält Gülle, die aus einem Gemisch von tierischem Kot, Harn und Transportwasser besteht, wertvolle Düngestoffe und Mineralien, so daß ein Interesse besteht, diese Stoffe dem landwirtschaftlichen Boden zwecks Düngung zuzuführen. Der in der Gülle enthaltene Stickstoff ist im wesentlichen in der Form von Ammonium enthalten, das nach dem Aufbringen auf den Boden bei Überforderung des Rückhaltevermögens des Bodens, durch Regen sehr leicht ausgewaschen wird und das Grundwasser belastet, nachdem Bodenbakterien den Ammoniumstickstoff in Nitratstickstoff überführt haben, bevor das Ammonium von den Pflanzen als Nahrung aufgenommen werden konnte.

Der vorliegenden Erfindung liegt die Aufgabe zugrunde, ein Verfahren zur Umwandlung von Gülle o.dgl. in einen verwertbaren Düngestoff vorzuschlagen, mit dem dieses beschriebene sogenannte Gülleproblem gelöst wird, d. h., daß aus der Gülle o.dgl. ein weitgehend geruchsloser, das Grundwasser nicht belastender, fester Düngestoff erzeugt wird, der auf umweltfreundliche Weise auf landwirtschaftliche Ackerböden praktisch zu jeder Jahreszeit aufgebracht werden kann.

Die Erfindung nutzt die Erkenntnis aus, daß die grundwasserschädigende Wirkung der Gülle hauptsächlich von dem in der Gülle enthaltenen Ammonium herrührt und nach bakterieller Umsetzung in Nitrat sich durch Regenwasser aus dem Ackerboden auswaschen läßt und somit bei hoher Ausbringungskonzentration das Grundwasser erreicht. Die vorstehende Aufgabe wird erfindungsgemäß dadurch gelöst, daß der Gülle eine solche Menge von Tonmineral zugesetzt wird, daß im wesentlichen die gesamte Menge des in der Gülle enthaltenen Ammoniums in dem Tonmineral unter voller Ausnutzung der Austauschkapazität des eine negative Überschußladung aufweisenden Kristallgitters des Tonminerals durch Absorption gebunden wird und, daß anschließend der Düngefeststoff von Flüssigkeit abgetrennt wird.

Das Ergebnis ist ein bodenähnliches Material mit krümeliger Konsistenz, das sich zwischen Lagern und/oder mit Streugeräten auf landwirtschaftliche Nutzflächen ausbringen läßt. Das im Tonmineral gebundene Ammonium wird vielmehr langsam durch Bodenbakterien abgebaut und dem Boden langsam als Nährstoff zugeführt.

Aus der EP-A-99 052 (entspricht der DE-A-32 25 454) ist bereits ein Verfahren zur Aufbereitung von fäkalen Abfällen bekannt, bei dem die Abfälle mit Tonmineralien behandelt werden. Das besondere bei diesem Verfahren besteht darin, daß durch die hohe spezifische Oberfläche des zugesetzten Bentonits eine große Menge von Mikroorganismen oberflächenmäßig gebunden werden kann, die wiederum für einen Abbau der schädlichen Stoffe in der Gülle sorgen sollen. Die den Fäkalien zugesetzten Bentonitmengen sind jedoch so gering, daß nur eine sehr geringe Menge des in der Gülle enthaltenen Ammoniums durch Absorption - als Nebeneffekt - gebunden wird, nämlich entsprechend einem angeführten Beispiel in dieser Druckschrift werden auf 150 m³ Rindergülle nur 30 kg eines Bentonitpräparats (Kalziumbentonit) zugesetzt.

Aus der Literaturstelle "Mitteilungen für die schweizerische Landwirtschaft", Nr. 8, Jahrgang 26, 1978, Seiten 141 bis 147, wird über Versuche zur Förderung der Nitrifikation in Rindergülle berichtet, bei dem versucht wird, Ammoniak in nicht-flüchtiges Nitrat mit Kalzium-Bentonit als Katalysator zu überführen. Bei den besprochenen Verfahren steht im Vordergrund, ein Gleichgewicht zwischen Ammoniakzufuhr und Nitrifikation herzustellen, so daß die Ammoniakoxidation sehr schnell und ohne nennenswerte Verdunstungsverluste verläuft. Auch wenn erwähnt wird, daß Kalzium-Bentonit zugegeben wird, von dem bekannt ist, daß er große Mengen von Ammoniumionen zu binden in der Lage ist, so kann bei den zugegebenen Bentonit-Mengen (zwischen 0,2 % und 10 %) nicht die gesamte Menge des in der Gülle enthaltenen Ammoniums durch Absorption gebunden werden, da zum einen die Menge zu gering ist und zum anderen das verwendete Kalzium-Bentonit bereits durch andere Stoffe (Kalzium) vorbelastet ist. Darüber hinaus befaßt sich das in dieser Literaturstelle beschriebene Verfahren mit der Herstellung von flüssigem Düngestoff.

Als Tonmineral findet zweckmäßigerweise ein Montmorillonit-Material Anwendung, das als Bodenart (sog. Benonit) vorkommt. Es kann aber als Tonmineral auch ein Vermiculit-Material verwendet werden, das zwar ergiebiger, jedoch teurer ist. Solche Tonmineralien kommen in der Natur in großen Mengen vor und dienen gleichzeitig als Bodenverbesserer.

Das erfindungsgemäße Verfahren ist zweckmäßigerweise gekennzeichnet durch folgende Verfahrensschritte:
a) Belüften der Gülle mit Luft in einem Rührwerk,
b) Zusatz von Tonmineral (z.B. Montmorillonit) in einem Rührwerk,
c) Einwirkenlassen bis zum Einstellen des Sorptionsgleichgewichtes (ca. 24 Stunden) und
d) Trennen in Düngefeststoff und Flüssigkeit z.B. in einer Dekantier-Zentrifuge.

Eine besonders wirksame Bindung des Ammoniums an das Kristallgitter des verwendeten Tonminerals erfolgt dann, wenn die Verfahrensfolge b) und c) zweimal hintereinander bei Zusatz von jeweils der halben Tonmineral-Menge durchgeführt wird. Auf diese Weise wird sichergestellt, daß das Aufnahmevermögen des Tonminerals voll ausgenutzt wird.

Für den Fall, daß die Gülle größere Feststoffpartikel enthält, werden diese vor Durchführung des Verfahrensschrittes a) zerkleinert. Ein besonders hohes Aufnahmevermögen des Tonminerals an Ammonium ergibt sich, wenn der pH-Wert der Mischung vor den Fusetzen des Tonminerals durch Zugabe von Natronlauge o.dgl. auf einen Wert von über 8, d. h. auf einen alkalischen Wert, eingestellt wird.

Die nach dem Verfahrensschritt d) gewonnenen Feststoffe werden ggf. mittels Heißluft getrocknet, um einen lager- und transportfähigen Düngestoff zu erhalten. Eine weitere zweckmäßige Behandlung des Düngestoffs besteht darin, daß anschließend Kalksteinmehl o.dgl. zugesetzt wird. Durch diese Maßnahme wird erreicht, daß die Restfeuchtigkeit des Düngestoffes gebunden wird und ein riesel- und streufähiger Düngestoff entsteht, der gleichzeitig als Bodenverbesserer dienen kann, da er die bodenmechanischen Eigenarten (Krümelstruktur, Waserempfindlichkeit o.ä.) günstig beeinflußt. Ferner sind die kolloiden Bestandteile einer Original-Gülle durch die Montmorillonitzugabe weitgehend aufgeflockt, wodurch eine Gelatinewirkung an der Bodenoberfläche vermieden wird.

Weitere vorteilhafte Weiterbildungen bzw. Ausgestaltungen des erfindungsgemäßen Verfahrens gehen aus den übrigen Unteransprüchen hervor. Die Erfindung wird nachfolgend näher erläutert.

Die in einem Lagertank befindliche Gülle, z.B. Schweinegülle, Rindergülle oder Gülle aus der Hühnerhaltung, wird in ein geeignetes Rührwerk gegeben und durch Luftzufuhr belüftet. Durch diese aerobe Aufbereitung wird sämtlicher in der Gülle vorhandener Harnstoff in Ammoniumkarbonat umgewandelt. Durch die gleichzeitige Selbsterwärmung der Gülle während dieses Prozesses werden pathogene Keime abgetötet, und es tritt bereits eine deutliche Geruchsverminderung ein. Befinden sich in der Gülle zu große Feststoffpartikel, so werden diese vor dem Belüften in einer geeigneten Zerkleinerungsvorrichtung zerkleinert.

Die auf diese Weise belüftete Gülle wird dann durch ein Rührwerk in einem größeren Absetzbecken, wie es ähnlich auch in Zuckerraffinerien zu finden ist, mit einem Tonmineral, insbesondere einem Montmorillonit-Material, versetzt. Die Mischung wird über einen ausreichenden Zeitraum bis zur Einstellung des Sorptionsgewichtes (ca. 24 Stunden) bei gelegentlichem Durchrühren zur Einwirkung stehengelassen. Anschließend erfolgt in einer Dekantier-Zentrifuge oder in einer anderen geeigneten Vorrichtung eine Trennung in Düngefestoff und verbleibender Flüssigkeit.

Die Restflüssigkeit enthält sowenige Reststoffe, daß sie nach Laborkontrolle als Abwasser entweder an einen Vorfluter oder ein Klärwerk abgegeben werden kann. Der Düngefestoff wird danach in einer Heißlufttrocknungsanlage getrocknet und ergibt einen weitgehend geruchslosen und das Grundwasser nicht mehr belastenden Düngestoff.

Um eine besonders gute Ausnutzung der Aufnahmefähigkeit des Tonminerals zu erzielen, erfolgt der Zusatz von Tonmineral in dem Rührwerk zweckmäßigerweise zunächst mit der halben Menge von Tonmineral und anschließendem Einwirkenlassen bei gelegentlichem Durchrühren. Anschließend wird noch einmal die gleiche Menge Tonmineral hinzugefügt und der Vorgang wiederholt.

Die Aufnahmefähigkeit des Tonminerals wird außerdem dadurch optimiert, daß der pH-Wert der Gülle vor dem Zersetzen des Tonminerals auf einen Wert von über 8, vorzugsweise auf 8,2, durch Zusetzen von Natronlauge o.dgl. eingestellt wird.

Die Funktion dieses erfindungsgemäßen Verfahrens liegt darin, daß das in der Gülle enthaltene Ammonium (NH₄ ) durch das Kristallgitter des Montomorillonits oder anderen Tonminerals dadurch gebunden wird, daß zwischen den Tetraederlagen des Kristallgitters eine negative Überschußladung besteht, die durch das positiv geladene Ammonium-Kation abgesättigt werden kann.

Diese Bindung des Ammoniums an das Kristallgitter des Tonminerals ist so stark, daß es durch Regen nicht mehr ausgewaschen werden kann. Außer dem Ammonium werden auch andere in der Gülle enthaltene Kationen (z.B. das Kalzium,Magnesium etc.) gebunden, so daß auch diese nicht mehr ausgewaschen werden können.

Laborversuche haben ergeben, daß 1 g Montmorillonit 1 mval Kation zu binden in der Lage ist. Das bedeutet, daß 1 g Montmorillonit 18 mg Ammonium oder 20 mg Calcium binden kann. Enthält 100 g Gülle z.B. 360 mg Ammonium, so bedeutet dies, daß kauf 100 g Gülle mindestens 20 g Montmorillonit erforderlich sind, unter der Voraussetzung, daß dieses Tonmineral nicht bereits durch andere Stoffe vorbelastet ist. Es wurde gefunden, daß bei Verwendung von 40 g Montmorillonit auf 100 g durchschnittlicher Gülle genügend Reserven vorhanden sind, um weitgehend die volle Menge des in der Gülle enthaltenen Ammoniums neben den anderen Kationen zu binden.

Wird die Einwirkung des Montmorillonit auf die vorher belüftete Güllemischung in zwei oder mehr Abschnitten durchgeführt, so wird bei jedem Vorgang zweckmäßigerweise die halbe bzw. entsprechende Menge Tonmineral angewandt. Ein Überschuß an Tonmineral schadet nicht sondern führt höchstens zu einem unwirtschaftlichen Betrieb.

Das Tonmineral Montmorillonit kommt in der Natur von und kann in verhältnismäßig reinem Zustand als Betonit abgebaut werden. Dieses Tonmineral dient im übrigen neben der Ammoniumbindung auch der Bodenverbesserung bestimmter Böden, da das Kationen-Austauschvermögen der Böden verbessert wird.

Anstelle von Montmorillonit kann auch ein anderes unter der Bezeichnung Vermiculit bekanntes Tonmineral verwendet werden, das bezüglich des Ammoniums noch aufnahmefähiger ist, aber auch mehr kostet.

Um den hergestellten Feststoff besser zwischenlagern und auf die landwirtschaftlichen Böden ausbringen zu können, ist es zweckmäßig, dem Feststoff anschließend Kalksteinmehl (CaCO₃) o.dgl. zuzusetzen, um die Restfeuchtigkeit zu binden und einen riesel- und streufähigen Düngestoff zu erhalten. Dieser Zusatz von Kalksteinmehl hat außerdem den Vorteil, daß er für saure und schwere Böden als Bodenverbesserer dienen kann.

Die Menge an zugeführtem Kalksteinmehl wird zweckmäßigerweise so bemessen, daß auf 100 kg Düngefeststoff mindestens 10 kg, vorzugsweise 20 kg Kalksteinmehl zugesetzt wird.

## Patentansprüche

1. Verfahren zum Umwandeln von Ammoniumhaltiger Gülle oder dergleichen in einen Weitgehend geruchslosen, Grundwasser-unschädlichen festen Wenigstens ein Ammonium-aborbierendes Tonmineral enthaltenden Düngestoff,
dadurch gekennzeichnet,
daß der Gülle eine solche Menge von Tonmineral zugesetzt wird, daß im wesentlichen die gesamte Menge des in der Gülle enthaltenen Ammoniums in dem Tonmineral unter voller Ausnutzung der Austauschkapazität des eine negative Überschußladung aufweisenden Kristallgitters des Tonminerals durch Absorption gebunden wird und, daß anschließend der Düngefeststoff von Flüssigkeit abgetrennt wird.

2. Verfahren nach Anspruch 1,
dadurch gekennzeichnet, daß als Tonmineral ein Montmorillonit-Material verwendet wird.

3. Verfahren nach Anspruch 1,
dadurch gekennzeichnet, daß als Tonmineral ein Vermiculit-Material verwendet wird.

4. Verfahren nach einem der Ansprüche 1 bis 3,
gekennzeichnet durch folgende Verfahrensschritte:
a) Belüften der Gülle mit Luft in einem Rührwerk,
b) Zusatz von Tonmineral in einem Rührwerk,
c) Einwirkenlassen bis zum Einstellen des Sorptionsgleichgewichtes (ca. 24 Stunden) und
d) Trennen in Düngefeststoff und Flüssigkeit z.B. in einer Dekantier-Zentrifuge.

5. Verfahren nach Anspruch 4,
dadurch gekennzeichnet, daß die Verfahrensfolge b) und c) zweimal hintereinander bei Zusatz von jeweils der halben Tonmineral-Menge durchgeführt wird.

6. Verfahren nach Anspruch 4 oder 5,
dadurch gekennzeichnet, daß die Feststoffe der Gülle vor Durchführung des Verfahrensschrittes a) zerkleinert werden.

7. Verfahren nach einem der Ansprüche 1 bis 5,
dadurch gekennzeichnet, daß vor dem Zusetzen des Tonminerals der pH-Wert der Gülle durch Zugabe von Natronlauge auf einen Wert von über 8 (alkalisch) eingestellt wird.

8. Verfahren nach Anspruch 4 oder 5,
dadurch gekennzeichnet, daß die nach dem Verfahrensschritt d) gewonnenen Feststoffe mittels Heißluft getrocknet werden.

9. Verfahren nach einem oder mehreren der vorhergehenden Ansprüche,
dadurch gekennzeichnet, daß dem Düngestoff Kalksteinmehl zugesetzt wird.

10. Verfahren nach Anspruch 2,
dadurch gekennzeichnet, daß auf 100 g Gülle bei einem Ammoniumgehalt von ca. 360 mg mindestens 20 g Montmorillonit-Material zugesetzt wird.

11. Verfahren nach Anspruch 10,
dadurch gekennzeichnet, daß mindestens 40 g Montmorillonit-Material zugesetzt wird.

12. Verfahren nach den Ansprüchen 4 und 9,
dadurch gekennzeichnet, daß auf 100 kg Düngefeststoff mindestens 10 kg Kalksteinmehl zugesetzt wird.

13. Verfahren nach Anspruch 12,
dadurch gekennzeichnet, daß mindestens 20 kg Kalksteinmehl zugesetzt wird.

## Claims

1. A process for transforming liquid manure containing ammonium or the like into a largely odourless, solid fertiliser, which is harmless to groundwater and which contains at least one ammonium-absorbing clay mineral, **characterized in that** to the liquid manure is added such a quantity of clay mineral that substantially the entire quantity of the ammonium contained in the liquid manure is combined by absorption in the clay mineral with the full use of the cation exchange capacity of the molecular lattice of the clay mineral having a negative excess charge,
**and in that** then the solid manure is separated from the liquid.

2. A process according to Claim 1,
**characterized in that** a montmorillonite material is used as the clay mineral.

3. A process according to Claim 1,
**characterized in that** a vermiculite material is used as the clay mineral.

4. A process according to one of Claims 1 to 3,
**characterized by** the following process steps:
a) aeration of the liquid manure with air in an agitator,
b) addition of clay mineral in an agitator,
c) being left to react until the adjustment of the absorption equilibrium (roughly 24 hours) and
d) separation into solid manure and liquid, e.g. in a decanting centrifuge.

5. A process according to Claim 4,
**characterized in that** the process sequence b) and c) is performed twice one after the another with the addition of respectively half the amount of clay mineral.

6. A process according to Claim 4 or 5,
**characterized in that** the solids of the liquid manure are reduced in size before the performance of process step a).

7. A process according to one of Claims 1 to 5,
**characterized in that** before the addition of the clay mineral the pH value of the liquid manure is adjusted (by alkaline means) to a value of over 8 by the addition of caustic soda.

8. A process according to Claim 4 or 5,
**characterized in that** the solids extracted after process step d) are dried by means of hot air.

9. A process according to one or several of the preceding Claims,
**characterized in that** limestone dust is added to the fertiliser.

10. A process according to Claim 2,
**characterized in that** at least 20 g montmorillonite material is added to 100 g liquid manure with an ammonium content of roughly 360 mg.

11. A process according to Claim 10,
**characterized in that** at least 40 g montmorillonite material is added.

12. A process according to Claims 4 and 9,
**characterised in that** at least 10 kg limestone dust is added to 100 kg solid manure.

13. A process according to Claim 12,
**characterised in that** at least 20 kg limestone dust is added.

## Revendications

1. Procédé pour la transformation de purin ou similaire contenant de l'ammonium en un engrais solide sensiblement inodore, inoffensif pour les eaux souterraines et contenant au moins un minéral argileux absorbant l'ammonium, caractérisé en ce
qu'on ajoute au purin une quantité de minéral argileux telle que sensiblement toute la quantité d'ammonium contenue dans le purin est liée par absorption dans le minéral argileux en utilisant complètement la capacité d'échange du réseau cristallin du matériau argileux présentant une charge négative excédentaire et en ce qu'on sépare ensuite l'engrais solide du liquide.

2. Procédé selon la revendication 1, caractérisé en ce que le minéral argileux est un matériau du type montmorillonite.

3. Procédé selon la revendication 1, caractérisé en ce que le minéral argileux est un matériau du type vermiculite.

4. Procédé selon l'une des revendications 1 à 3, caractérisé par les étapes suivantes :
a) aération du purin avec de l'air dans un mélangeur,
b) addition de minéral argileux dans un mélangeur,
c) période d'action jusqu'à l'établissement de l'équilibre d'absorption (environ 24 heures) et
d) séparation en engrais solide et en liquide, par exemple dans une centrifugeuse à décantation.

5. Procédé selon la revendication 4, caractérisé en ce que l'étape b) et l'étape c) sont effectuées l'une après l'autre en ajoutant à chaque fois la moitié de la quantité de minéral argileux.

6. Procédé selon la revendication 4 ou la revendication 5, caractérisé en ce qu'on fractionne les matières solides du purin avant d'effectuer l'étape a) du procédé.

7. Procédé selon l'une des revendications 1 à 5, caractérisé en qu'avant d'ajouter le minéral argileux, on règle le pH du purin à une valeur supérieure à 8 (alcaline) par addition d'une lessive de soude.

8. Procédé selon la revendication 4 ou la revendication 5, caractérisé en ce qu'on sèche au moyen d'air chaud les matières solides obtenues par l'étape d) du procédé.

9. Procédé selon l'une ou plusieurs des revendications précédentes,
caractérisé en ce qu'on ajoute de la farine de calcaire à l'engrais.

10. Procédé selon la revendication 2, caractérisé en ce qu'on ajoute au moins 20g de matériau du type montmorillonite à 100g de purin ayant une teneur en ammonium de 360 mg environ.

11. Procédé selon la revendication 10, caractérisé en ce qu'on ajoute au moins 40g de matériau du type montmorillonite.

12. Procédé selon les revendications 4 et 9, caractérisé en ce qu'on ajoute au moins 10Kg de farine de calcaire à 100 Kg d'engrais solide.

13. Procédé selon la revendication 12, caractérisé en ce qu'on ajoute au moins 20 Kg de farine de calcaire.
